# DEMANDE DE BREVET EUROPEEN

(11) **EP 0 592 280 A1**
(43) Date de publication de la demande: **13.04.1994**
(21) Numéro de dépôt: 93402368.0
(22) Date de dépôt: 28.09.1993
(51) Int. Cl.: G10L 3/00, G10L 5/06, B64C 13/50

(54) **Procédé et dispositif d'analyse d'un message fourni par des moyens d'interaction à un système de dialoque homme-machine**

(30) Priorité: 06.10.1992 FR 9211816
(71) Demandeur: SEXTANT AVIONIQUE, F-92360 Meudon-la-Forêt (FR)
(72) Inventeur: Favot, Jean-Jacques, F-92402 Courbevoie Cédex (FR); Perbet, Jean-Noel, F-92402 Courbevoie Cédex (FR); Barbier, Bruno, F-92402 Courbevoie Cédex (FR); Lach, Patrick, F-92402 Courbevoie Cédex (FR)
(74) Mandataire: Benoit, Monique

(57) **Abrégé**

L'invention concerne un procédé et dispositif d'analyse d'un message fourni par des moyens d'interaction à un système de dialogue homme-machine.

Le procédé comprend trois étapes consécutives, une première étape d'analyse syntaxique (1, 2, 3), une deuxième étape d'analyse sémantique (5) et une troisième étape d'analyse d'exécution (6). L'analyse syntaxique (1, 2, 3) évalue la conformité d'un message (4) fourni par les moyens d'interaction à une forme de dialogue prédéfinie, l'analyse sémantique (5) évalue le sens de la demande de l'opérateur dialoguant avec la machine et l'analyse d'exécution (6) détermine la réalisation d'une action à entreprendre issue de l'étape d'analyse sémantique.

Application : Systèmes de dialogue homme-machine comportant plusieurs moyens d'interaction tels que la parole, le geste ou le regard notamment.

## Description

La présente invention concerne un procédé et un dispositif d'analyse d'un message fourni par des moyens d'interaction à un système de dialogue homme-machine. Elle s'applique notamment aux systèmes d'interaction homme-machine comportant plusieurs moyens d'interaction tels que la parole, le geste ou le regard par exemple.

Dans un système d'interaction homme-machine, I'activité d'un opérateur est captée par des moyens d'interaction de l'homme vers la machine, ou moyens d'interaction d'entrée. Différents modules peuvent par exemple être affectés au traitement des informations fournies par ces moyens d'interaction. Les moyens d'interaction étant généralement de plusieurs types, ces informations fournies sont appelées messages multimédia. Un module peut par exemple traduire sous forme d'évènements l'activité de l'opérateur, ces évènements peuvent ensuite être analysés par un autre module et enfin un troisième module peut les envoyer vers l'application.

Une limitation de tels systèmes est que toute action de l'utilisateur est traduite sous forme d'évènements datés, c'est-à-dire finis, localisés et fortement espacés dans le temps. Une information de type continu comme, par exemple, le déplacement de la main ou du regard est ainsi perdue, rendant impossible la gestion d'actions continues, notamment le déplacement en continu d'un objet virtuel ou l'ajustement d'un réglage virtuel.

En conséquence, ces systèmes d'interaction homme-machine sont difficilement utilisables dans des applications telles qu'un pilotage d'avion notamment, où le flux d'informations à prendre en compte devient de plus en plus important et où les temps de prise de décision deviennent de plus en plus courts.

Le but de l'invention est de pallier les inconvénients précités, notamment en permettant une analyse temps réel d'un message multimédia, composé d'éléments caractéristiques de l'activité de l'opérateur à un instant donné.

A cet effet, l'invention a pour objet un procédé d'analyse d'un message contenant des évènements et des données continues provenant d'un opérateur et transmis par des moyens d'interaction à un système de dialogue entre un homme et une machine, caractérisé en ce qu'il comprend trois étapes consécutives, une première étape d'analyse syntaxique, une deuxième étape d'analyse sémantique et une troisième étape d'analyse d'exécution, l'analyse syntaxique évaluant la conformité d'un message fourni par les moyens d'interaction par rapport à une forme de dialogue prédéfinie, l'analyse sémantique évaluant le sens de la demande de l'opérateur et l'analyse d'exécution déterminant la réalisation d'une action à entreprendre issue de l'étape d'analyse sémantique.

L'invention a également pour objet un dispositif pour la mise en oeuvre du procédé précité.

L'invention a pour principaux avantages qu'elle améliore l'ergonomie des systèmes de dialogue homme-machine, qu'elle permet à ces systèmes de traiter un plus grand nombre d'informations dans un temps plus court, qu'elle les rend plus efficaces et plus fiables notamment en conservant l'opérateur dans la boucle d'interactivité, qu'elle est économique et aisée à mettre en oeuvre.

D'autres caractéristiques et avantages de l'invention apparaîtront à l'aide de la description qui suit, faite en regard des dessins annexés qui représentent :
- la figure 1, une illustration du procédé selon l'invention ;
- la figure 2, une illustration d'une étape du procédé selon l'invention ;
- la figure 3, un mode de réalisation possible d'un dispositif selon l'invention ;
- la figure 4, une illustration d'un exemple d'application du procédé selon l'invention.

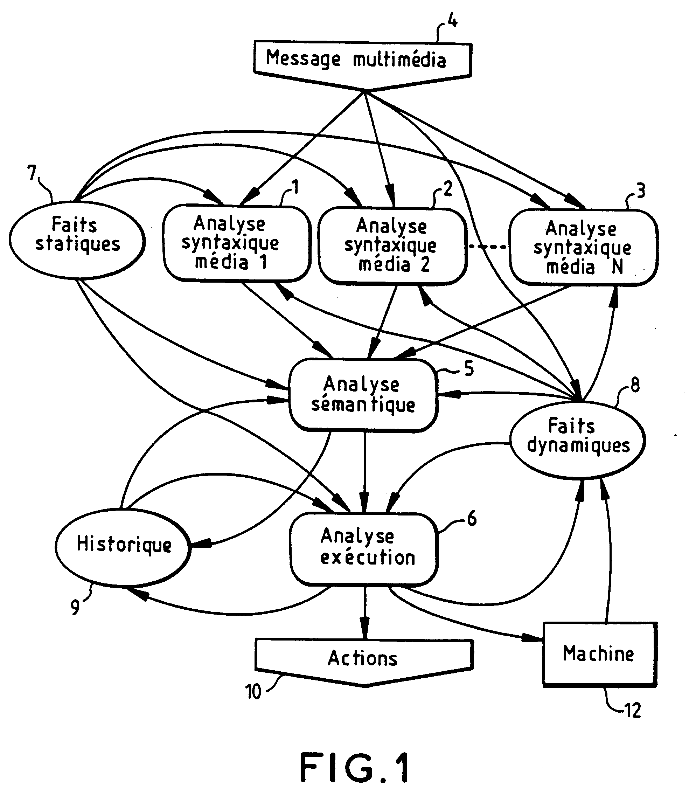

La figure 1 illustre le procédé d'analyse selon l'invention. Sur cette figure, le sens des flèches indique le sens des informations, une flèche indiquant le passage d'informations d'un point à un autre. Le principe du procédé selon l'invention est de réaliser une analyse progressive de messages multimédia en suivant trois étapes consécutives, une première étape d'analyse syntaxique, une deuxième étape d'analyse sémantique et une troisième étape d'analyse d'exécution. Cette analyse d'un message multimédia, ce message étant le résultat d'une action de l'homme sur la machine, doit permettre d'en dégager l'aspect sémantique et en déduire les actions correspondantes à entreprendre. Un message est composé d'évènements, aléatoires par nature, des phrases parlées ou des postures manuelles par exemple, et est aussi composé de données continues et non aléatoires, notamment des mesures de positions, de la main ou de direction du regard par exemple. Ce message arrive aux moyens d'analyse cycliquement, et à la demande de ceux-ci par exemple. La cadence d'arrivée des messages doit notamment être suffisante pour donner une impression de temps réel à l'échelle humaine et pour ne pas perdre d'informations de nature continue. A cet effet, la durée entre deux messages consécutifs peut être inférieure à 100 ms par exemple.

La figure 1 montre les trois étapes d'analyse selon l'invention. La première étape 1, 2, 3 réalise des analyses syntaxiques d'un message multimédia 4 fourni par des moyens d'interaction homme-machine connus de l'homme du métier. La figure 1 illustre un cas où le message 4 contient des informations fournies par N média. L'information relative à chaque média est analysée séparément, ces analyses peuvent par exemple être effectuées en parallèle et de façons indépendantes. Ainsi, dans la première étape 1, 2, 3 une première analyse syntaxique 1 traite un premier média, une deuxième analyse syntaxique 2 traite un deuxième média et N^{ième} analyse syntaxique traite un N^{ième} média, N étant un nombre entier supérieur ou égal à 1.

Les résultats de la première étape 1, 2, 3 d'analyse syntaxique sont ensuite analysés dans la deuxième étape 5 d'analyse sémantique. Puis les résultats de cette deuxième étape sont analysés dans la troisième étape 6 d'analyse d'exécution. Cette dernière étape détermine notamment comment réaliser une action 10 à entreprendre, notamment si elle est exécutable ou non, les actions étant appliquées à la machine 12 sur laquelle un opérateur interagit ou vers l'opérateur via des interfaces. Les étapes d'analyse 1, 2, 3, 5, 6 utilisent par exemple des informations issues de la machine 12.

Des bases de faits 7, 8 fournissent par exemple des informations aux moyens d'analyse durant les trois étapes 1, 2, 3, 5, 6 précitées. Une base de faits statiques 7 peut par exemple fournir des informations prédéfinies concernant notamment le vocabulaire vocal ou gestuel, des données constantes du système ou l'état du système notamment. Une base de faits dynamiques 8 peut par exemple servir à stocker des données transitoires, telles que des résultats intermédiaires ou encore l'état du système notamment. Un historique 9 est utilisé par exemple pour mémoriser le déroulement du dialogue et des actions. Les données continues du message multimédia 4 sont traduites sous forme de faits et sont stockées dans la base de faits dynamiques 8. Cela a pour avantage notamment de ne pas saturer ou encombrer les étapes d'analyse 1, 2, 3, 5, 6 avec des données qui n'interviennent pas au niveau syntaxique car ces données continues ne sont pas en tant que telles des évènements à interpréter. Ces données continues interviennent notamment dans l'interprétation des évènements, par exemple vocaux ou gestuels, cette interprétation faisant appel à la base de faits dynamiques.

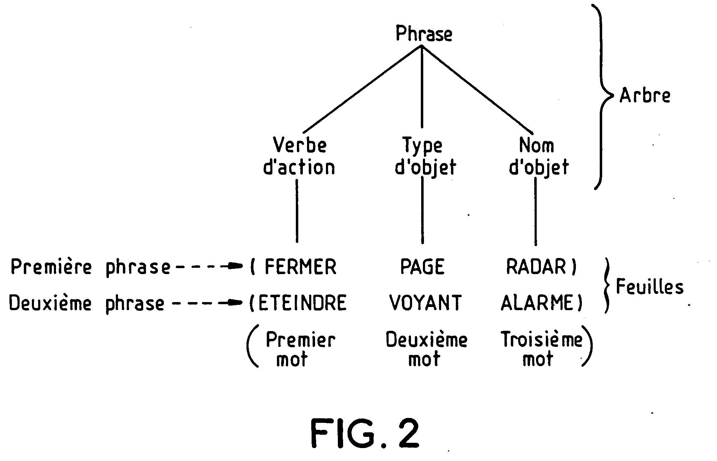

La figure 2 illustre un mode d'analyse syntaxique possible pouvant être utilisé par le procédé selon l'invention. Le rôle de l'étape d'analyse syntaxique est d'évaluer si un évènement issu d'un média ou moyen d'interaction donné est conforme à l'une des formes de dialogue définies pour le média en question. En appelant "arbre de syntaxe" ou tout simplement "arbre", chaque forme de dialogue possible d'un média donné, en appelant "feuilles", les termes se trouvant aux extrémités de ces arbres et en appelant "phrase" une suite ordonnée d'un ou plusieurs mots du vocabulaire du média analysé, vocabulaire vocal ou gestuel par exemple, il s'ensuit que l'analyse syntaxique d'un média se résume à identifier parmi les arbres possibles, celui dont la liste ordonnée des feuilles est identique, élément par élément, à la phrase du message multimédia reçu. Une fois l'arbre identifié, I'étape d'analyse documente chaque mot de la phrase en lui associant un attribut. Cet attribut définit la participation du mot au sens de la phrase.

La figure 2 présente deux exemples de phrase à analyser, dans un cas d'application de pilotage d'avion par exemple. L'arbre de syntaxe définit par exemple une phrase possible de dialogue comme possédant un verbe d'action suivi d'un type d'objet suivi d'un nom d'objet. Une première phrase à analyser est par exemple "fermer page radar" et une deuxième phrase "éteindre voyant alarme". L'arbre de la figure 2 est analysé dans la première étape qui en déduit la validité de la syntaxe. Si celle-ci est correcte, la première étape d'analyse syntaxique délivre alors trois mots, un premier mot indiquant le verbe d'action, un deuxième mot indiquant le type d'objet de l'action et un troisième mot indiquant le nom de l'objet. D'autres types de syntaxe, c'est-à-dire d'arbres syntaxiques, peuvent être analysés, pouvant notamment comprendre plus ou moins de mots.

Dans le cas d'utilisation de certains média comme par exemple des moyens de reconnaissance gestuelle, ceux-ci peuvent nécessiter des modes d'analyse particuliers car la phrase définie précédemment est répartie sur plusieurs messages. L'analyse syntaxique peut alors être réalisée séquentiellement et les résultats des étapes d'analyse syntaxique intermédiaires peuvent être par exemple mémorisés dans la base des faits dynamiques 8.

Si une phrase ne correspond pas à une syntaxe correcte, elle est rejetée et l'utilisateur peut par exemple être averti par un signal sonore ou visuel, ou un message.

Comme l'illustre la figure 1, la première étape d'analyse syntaxique peut être constituée par exemple de plusieurs analyses syntaxiques 1, 2, 3 indépendantes, le nombre d'analyses syntaxiques étant égal au nombre de médias ou moyens d'interactions, un média étant associé à chaque analyse. Dans ce cas, du point de vue de la syntaxe, chaque média est traité indépendamment des autres. Cela permet notamment d'assurer une bonne souplesse de dialogue entre l'homme et la machine. Chaque moyen d'analyse affecté à une analyse de la première étape reçoit la partie du message multimédia qui concerne cette analyse, c'est-à-dire l'information provenant de son média associé. Chaque moyen d'analyse fournit un message qui est traité par la deuxième étape d'analyse sémantique. Ce message contient par exemple une partie identifiant le média d'où provient l'information ainsi que des attributs de sens affectés aux mots de la phrase. Un tel message peut alors avoir la forme suivante par exemple :
NMédia (Atb)(premier mot), Atb (deuxième mot), Atb(troisième mot)
où NMédia représente une identification d'un média,
Atb représente un attribut de sens de mot, les premier, deuxième et troisième mots pouvant être par exemple les mots précités, notamment "fermer", "page", "radar". Les vocabulaires associés aux différents médias sont par exemple stockés dans la base des faits statiques 7.

Une fois analysée et acceptée, la phrase documentée est transmise à des moyens d'analyse sémantique réalisant la deuxième étape du procédé selon l'invention.

Le rôle de l'étape d'analyse sémantique est notamment d'évaluer le sens de la requête de l'opérateur d'après les résultats de l'étape d'analyse syntaxique. Elle permet par exemple d'identifier l'action à entreprendre, l'objet de l'action, c'est-à-dire sur quoi porte l'action, et les modalités d'application définies par des paramètres. Si le contenu des résultats des analyses syntaxiques ne suffit pas pour établir le sens de la requête, l'analyse sémantique tente notamment d'y parvenir en utilisant des informations complémentaires issues par exemple des bases de faits 7, 8 ou de l'historique 9. Ce peut être le cas par exemple pour des requêtes faisant intervenir des désignations d'objets, l'objet de l'action étant alors issu de la base des faits dynamiques 8. C'est aussi le cas par exemple pour des phrases comportant des ellipses, c'est-à-dire des phrases ayant des éléments manquants faisant référence au dialogue antérieur, où le sens ne peut être trouvé notamment que par une analyse de l'historique du dialogue.

Toute requête sémantiquement correcte est ensuite traitée par la troisième étape d'analyse d'exécution. Cette requête comporte par exemple le type d'actions à exécuter, l'objet sur lequel porte cette action et la liste des paramètres à prendre en compte. Une requête peut alors être transmise à l'étape d'analyse d'actions par une suite ayant la forme suivante par exemple :
(Action, Objet, Par 1, Par 2, ... Par N)

Action indiquant le type d'action, Objet indiquant l'objet sur lequel elle porte et Par 1, Par 2, ... Par N une liste de N paramètres.

En cas de requête incomplète, le système d'interaction homme-machine peut par exemple demander à l'opérateur un complément d'information, cette demande étant réalisée par voix synthétique, par texte ou par image par exemple. L'historique peut alors servir notamment à mémoriser l'état intermédiaire de la requête. Toute requête n'ayant aucun sens dans le contexte du dialogue est par exemple sanctionnée par un message d'erreur.

Le rôle de l'étape d'analyse d'exécution est notamment de déterminer la réalisation d'une action à entreprendre vers l'opérateur ou vers la machine 12 sur laquelle l'opérateur interagit issue de l'étape d'analyse sémantique. L'analyse porte notamment sur le contexte dans lequel l'action a à se dérouler. Ce contexte concerne par exemple l'état de la machine de l'application ou du système de dialogue. Par exemple, dans le cas de la demande "fermer page radar" précitée, I'étape d'analyse d'exécution vérifie par exemple que la page radar est ouverte, cette page étant représentée sur un écran de visualisation, que la page n'est pas liée à une autre action en cours et qu'il n'y a pas d'interdiction pour la fermer.

Pour toute action jugée exécutable, I'étape d'analyse d'exécution compose et transmet vers un processeur d'exécution, une séquence d'ordres élémentaires, les actions étant exécutées sur des objets graphiques sur un écran de visualisation ou de façon sonore par exemple. Ces ordres sont par exemple transmis par une séquence ayant la forme suivante :
(Cde, Par 1, Par 2, ... Par N)

Cde désignant une commande donnée, et Par 1, Par 2, ... Par N étant une liste de paramètres.

Toute action non exécutable est par exemple sanctionnée par l'émission d'un message d'erreur vocal ou visuel.

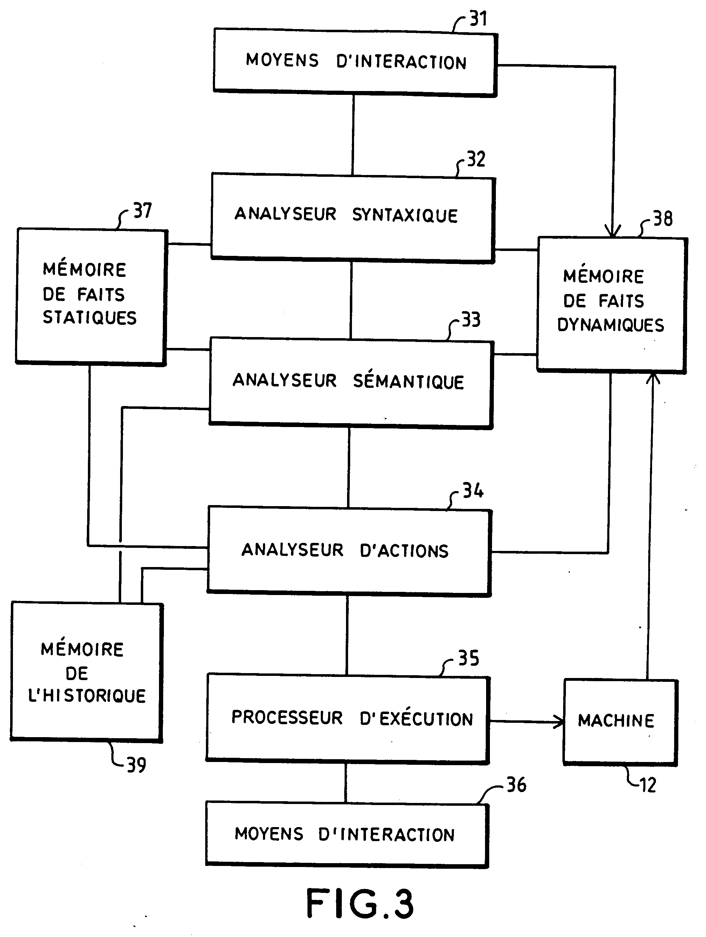

La figure 3 présente un mode de réalisation possible d'un dispositif pour la mise en oeuvre du procédé selon l'invention. Il comprend en entrée des moyens d'interaction 31. Ceux-ci peuvent être par exemple des moyens de reconnaissance vocale ou gestuelle, les gestes étant notamment ceux de la main de l'opérateur reconnu au moyen d'un gant numérique ou tout autre geste corporel de l'opérateur, ces moyens d'interaction peuvent encore permettre par exemple de détecter le regard de l'opérateur, grâce à l'utilisation d'un oculomètre notamment, ou de détecter la position de la main ou de la tête de l'opérateur à l'aide de capteurs électromagnétiques. Ces moyens d'interaction 31 sont reliés à des moyens d'analyse syntaxique réalisant la première étape 1, 2, 3 du procédé selon l'invention. Ces derniers comportent par exemple autant de moyens de syntaxe indépendants qu'il y a de médias, voix, geste, regard par exemple. Les moyens d'analyse syntaxique 32 sont reliés à des moyens d'analyse sémantique 33 réalisant la deuxième étape 5. Ces moyens sont eux-mêmes reliés à des moyens d'analyse d'exécution 34 réalisant la troisième étape 6. Ils sont couplés à un processeur d'exécution 35, lequel est relié à des moyens d'interaction 36, des moyens de synthèse vocale ou des moyens de visualisation, écran de visualisation par exemple. Ils sont aussi couplés à la machine 12. Les moyens d'analyses 32, 33, 34 peuvent être implantés sur un même calculateur ou répartis sur plusieurs calculateurs, un calculateur étant affecté à chaque étape d'analyse. Une mémoire 37 contenant les faits statiques est reliée aux moyens d'analyse 32, 33, 34. De même, une mémoire 38 est reliée aux moyens d'analyse 32, 33, 34, à la machine 11 et aux moyens d'interaction 31. Une mémoire 39 contenant notamment l'historique d'un dialogue homme-machine est reliée aux moyens d'analyse sémantique 33 et d'exécution 34.

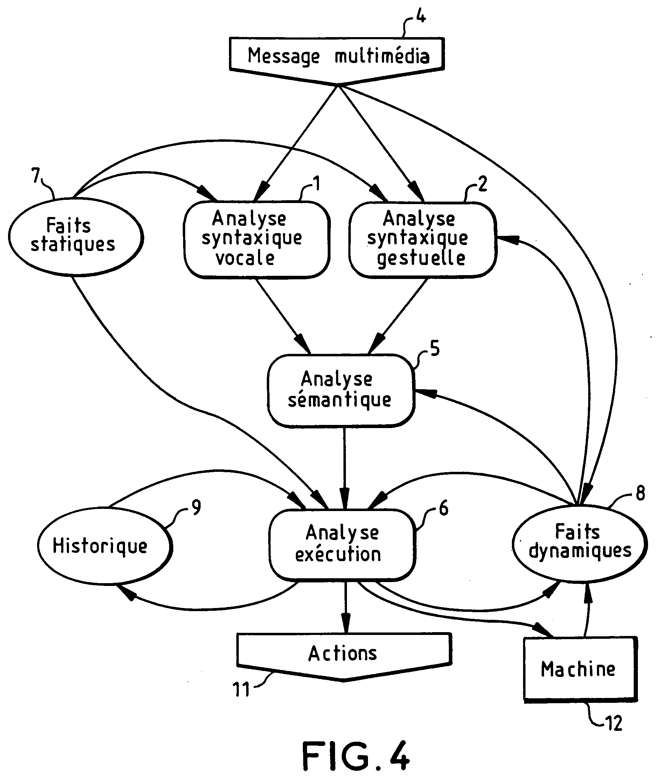

La figure 4 illustre un exemple d'application du procédé selon l'invention, dans le cas notamment d'un système de dialogue homme-machine dont un moyen d'interaction est constitué par exemple d'un écran et d'un dispositif de synthèse vocale d'une part, et d'autre part de médias d'entrée constitués de la voix et des gestes de la main, les gestes comprenant la posture et la position de la main.

L'utilisation du dispositif est notamment de permettre la gestion de systèmes complexes en fournissant à l'opérateur des moyens de dialogue riches, tels que la voix, les gestes de la main ou le regard par exemple, et des informations de sortie du type graphique ou sonore, grâce à un écran de visualisation et des moyens de synthèse vocale et sonore. Un exemple d'utilisation est la gestion d'une planche de bord virtuelle d'un avion.

L'illustration de la figure 4 montre que la première étape d'analyse syntaxique comporte une analyse syntaxique vocale 1 et une analyse syntaxique gestuelle 2, correspondant chacune respectivement à un premier média, la voix, et à un deuxième média, le geste de la main par exemple, tel que défini précédemment, éventuellement, les gestes pourraient concerner d'autres parties du corps. Les autres étapes 5, 6 sont les mêmes que celles définies par la figure 1. De même, les bases de faits statiques 7 et dynamiques 8, ainsi que l'historique 9 s'articulent autour de ces étapes conformément à ce qui a été décrit en regard de la figure 1. Les actions définies par l'étape d'analyse d'exécution 6 sont des actions graphiques 11 portant sur des objets visualisés par l'écran. Les actions générées par la troisième étape 6 d'analyse d'exécution peuvent aussi porter sur les moyens de synthèse vocale ou sonore, et sur la machine 12.

Un système expert, encore appelé système à règles de production peut permettre par exemple de réaliser les trois étapes du procédé d'analyse selon l'invention et assurer ainsi la compréhension d'un message multimédia contenant l'activité de l'opérateur, dans une tranche de temps donnée, le temps d'application étant divisé en tranches d'une durée d'environ 100 ms par exemple.

Dans le cas d'application de la figure 4, un message multimédia est par exemple transmis au système expert sous la forme d'une liste de données informatiques. Cette liste comprend par exemple une suite ordonnée de mots vocaux, une posture manuelle reconnue, une identification d'objet désigné. Par ailleurs elle contient par exemple la distance de la main de l'opérateur à l'écran ou la position angulaire de la main autour de l'axe du bras.

La base de faits statiques 7 est par exemple stockée dans une mémoire 37 à lecture seule comme l'illustre la figure 3. Elle contient par exemple un vocabulaire vocal, un vocabulaire postural et des positions, tailles et attributs par défaut d'objets graphiques.

La base de faits dynamiques 8 est contenue dans une mémoire 38 à lecture et écriture. Elle contient par exemple les positions et tailles courantes des objets présentés sur l'écran de visualisation, un identificateur de l'objet désigné, les dernières positions et orientations de la main, I'état courant des moyens d'analyse syntaxique gestuelle et l'état des médias, notamment en ce qui concerne leur disponibilité et leur activation, et des paramètres de la machine 12.

L'historique 9 est contenu dans une mémoire 39 à lecture et écriture. Elle contient par exemple les ordres en cours dans le processeur d'exécution 35 et les objets en cours de manipulation, notamment en ce qui concerne leur état initial et leur état courant.

Les moyens d'analyse vocale comportent par exemple un ensemble de règles permettant notamment le codage de la syntaxe et le mécanisme de recherche de l'arbre syntaxique précédemment défini. Ils fournissent aux moyens d'analyse sémantique l'arbre trouvé.

Les moyens d'analyse gestuelle comportent par exemple un automate à états finis. Au fur et à mesure du fonctionnement de l'automate, les moyens d'analyse gestuelle envoient aux moyens d'analyse sémantique des messages. Les ordres transmis sont notamment des mots associés à un arbre syntaxique tels que par exemple, prendre, déplacer, poser, jeter, diminuer ou augmenter, ces ordres étant appliqués à un objet graphique.

Les moyens d'analyse sémantique comportent un ensemble de règles dont le rôle est notamment d'interpréter le sens des messages entrants pour synthétiser les actions à entreprendre.

Ils fournissent en sortie un message indiquant l'action à exécuter, l'objet de l'action et divers paramètres associés. Ils identifient l'action en utilisant notamment les mots d'attribut associés précédemment définis ou en les reconstituant à partir du contexte du dialogue. Ils identifient l'objet de l'action en utilisant le mot d'attribut associé ou en le reconstituant à partir de la base de faits dynamiques contenant notamment l'objet désigné. Ils identifient les paramètres en utilisant notamment les mots d'attribut par 1, par 2, ... par N précités. Ils éliminent par exemple tous les mots n'ayant pas d'attribut.

Les moyens d'analyse d'exécution comportent par exemple un ensemble de règles dont le rôle est notamment d'analyser la manière d'exécuter une action issue des moyens d'analyse sémantique, et de générer pour le processeur d'exécution 35, les commandes élémentaires nécessaires. Dans le cas où l'analyse d'exécution concerne l'exemple de requête suivant (OUVRIR, RADAR, 0) l'analyse nécessite au moins trois règles, OUVRIR étant l'action, RADAR étant l'objet de l'action et 0 un paramètre. Une première règle traite le cas où une fenêtre graphique associée à l'objet RADAR est déjà ouverte, une deuxième règle traite le cas où cette fenêtre n'est pas ouverte. Une troisième règle traite le cas où le deuxième argument de la requête, RADAR, n'est pas un nom de fenêtre. L'ordre d'écriture des règles peut être important, l'analyseur évaluant les règles précédentes dans l'ordre précité. Il est en effet concevable que la troisième règle ne se déclenche que si la première règle et la deuxième règle ont échoué.

## Revendications

1. Procédé d'analyse d'un message contenant des évènements et des données continues, provenant d'un opérateur et transmis par des moyens d'interaction à un système de dialogue entre un homme et une machine (12), caractérisé en ce qu'il comprend trois étapes consécutives, une première étape d'analyse syntaxique (1, 2, 3), une deuxième étape d'analyse sémantique (5) et une troisième étape d'analyse d'exécution (6), l'analyse syntaxique (1, 2, 3) évaluant la conformité d'un message (4) fourni par les moyens d'interaction par rapport à une forme de dialogue prédéfinie, l'analyse sémantique (5) évaluant le sens de la demande de l'opérateur et l'analyse d'exécution (6) déterminant la réalisation d'une action à entreprendre issue de l'étape d'analyse sémantique.

2. Dispositif selon la revendication 1, caractérisé en ce que les données continues sont traduites sous forme de faits et sont stockées dans une base de faits dynamiques (8), les étapes d'analyse (1, 2, 3, 5, 6) utilisant les informations issues de la base de faits dynamiques (8).

3. Procédé selon l'une quelconque des revendications précédentes, caractérisé en ce que les étapes (1, 2, 3, 5, 6) utilisent des informations issues d'une base de faits statiques (7) contenant des données prédéfinies.

4. Procédé selon l'une quelconque des revendications précédentes, caractérisé en ce que les étapes (1, 2, 3, 5, 6) utilisent des informations issues d'un historique (9) mémorisant le déroulement du dialogue et des actions.

5. Procédé selon l'une quelconque des revendications précédentes, caractérisé en ce que la première étape d'analyse syntaxique comporte une analyse syntaxique vocale et une analyse syntaxique gestuelle.

6. Procédé selon l'une quelconque des revendications précédentes, caractérisé en ce que les étapes utilisent des informations issues de la machine (12).

7. Dispositif pour la mise en oeuvre du procédé selon l'une quelconque des revendications précédentes, caractérisé en ce qu'il comprend au moins :
- en entrée, des moyens d'interaction (31)
- des moyens d'analyse syntaxique (32) reliés aux moyens d'interaction (31) d'entrée
- des moyens d'analyse sémantique (33) reliés aux moyens d'analyse syntaxique
- des moyens d'analyse d'exécution (34) reliés aux moyens d'analyse sémantique
- un processeur d'exécution (35) relié aux moyens d'analyse d'exécution et à la machine (12)
- en sortie, des moyens d'interaction (36) reliés au processeur d'exécution (35).

8. Dispositif selon la revendication 7, caractérisé en ce qu'il comprend en outre :
- une mémoire contenant la base de faits statiques (7), reliée aux moyens d'analyse (32, 33, 34)
- une mémoire contenant la base de faits dynamiques (8), reliée aux moyens d'analyse (32, 33, 34)
- une mémoire contenant l'historique (9), reliée aux moyens d'analyse sémantique (33) et d'exécution (34).

9. Dispositif selon l'une quelconque des revendications 7 ou 8, caractérisé en ce qu'il comprend autant de moyens d'analyse syntaxique que de moyens d'interaction d'entrée.

10. Dispositif selon l'une quelconque des revendications 7 à 9, caractérisé en ce que les moyens d'analyse (32, 33, 34) sont réalisés par un système à règles de production.
